# EUROPÄISCHE PATENTSCHRIFT

(11) **EP 1 268 162 B1**
(45) Veröffentlichungstag und Bekanntmachung des Hinweises auf die Patenterteilung: **06.12.2006**
(21) Anmeldenummer: 01923693.4
(22) Anmeldetag: 21.03.2001
(51) Int. Cl.: B29C 49/74, B67B 7/46, B65B 43/00, B26D 1/00

(54) **VORRICHTUNG ZUM ÖFFNEN VON KUNSTSTOFFLASCHEN DURCH ABSCHNEIDEN DES DOMES**
DEVICE FOR OPENING PLASTIC BOTTLES BY CUTTING THE DOME
DISPOSITIF POUR L'OUVERTURE DE BOUTEILLES EN PLASTIQUE PAR DECOUPE DU DOME

(30) Priorität: 30.03.2000 DE 10015763
(43) Veröffentlichungstag der Anmeldung: 02.01.2003
(73) Patentinhaber: Tetra Laval Holdings & Finance SA, 1009 Pully (CH)
(72) Erfinder: WALDSTÄDT, Manfred, 55127 Mainz (DE)
(74) Vertreter: Weber, Dieter
(86) Internationale Anmeldenummer: PCT/EP2001/003235
(87) Internationale Veröffentlichungsnummer: WO 2001/074563

(56) Entgegenhaltungen:
- US-A- 4 305 904
- US-A- 5 163 347
- US-A- 5 167 968
- US-A- 5 201 788
- US-A- 5 257 560

## Beschreibung

Die Erfindung betrifft eine Vorrichtung zum Öffnen von durch zugeschmolzene Dome luftdicht verschlossenen geblasenen, mit einem Verschlußgewinde versehenen, in Haltemitteln befindlichen Kunststoffflaschen durch Abschneiden des Domes mit einem relativ zu dem Dom längs dessen Umfang bewegbaren, in einem Schneidkopf gelagerten Schneidmesser, wobei die Haltemittel für den Eingriff mit dem abzuschneidenden Teil des Domes mindestens zwei radial zu dem Dom bewegbare Zentrierfinger aufweisen.

Es ist bekannt, einen extrudierten Kunststoffschlauch stückweise abzulängen und daraus Kunststoffflaschen zu blasen. Es handelt sich dann um sogenannte EBM-Flaschen (Extrusion Blow Moulding). Das Kunststoffmaterial solcher bekannten Flaschen ist HDPE (High Density Polyethylen). Man verschließt diese Kunststoffflaschen dadurch, daß der sich aus dem Schlauchstück beim Blasvorgang bildende Dom (auch "Blastulpe" genannt) zugeschmolzen und im luftdicht verschmolzenen Zustand an der Flasche belassen wird. Erfolgt dieses Zusammenschmelzen unter Verwendung steriler Luft oder in einer keimarmen Atmosphäre, so ist der Innenraum der jeweiligen Kunststoffflasche keimfrei oder keimarm und bleibt in diesem Zustand bis zum Entfernen des Domes. Das Zuschmelzen des Flaschendomes kann zum Beispiel dadurch erfolgen, daß die Wände des Domes durch zwei aufeinanderzu bewegte Preßbacken gegeneinandergedrückt und dadurch miteinander heißversiegelt werden, solange das Kunststoffmaterial der Domwände noch genügend warm ist. Solche Kunststoffflaschen können vorproduziert und bis zur Abfüllung gelagert werden, ohne daß das Risiko einer Kontamination des Flascheninneren besteht. Bei dem bekannten Offnungsverfahren wird die Flasche vor dem Abfüllen in der Füllmaschine außen sterilisiert, getrocknet, und dann wird in einer Reinraumumgebung der Flaschendom abgeschnitten.

Das Abschneiden des Flaschendomes erfolgt bei der bekannten Vorrichtung durch ein Schneidmesser, welches quer zur Bewegungsrichtung des Blasdomes seitlich an diesen herangeführt wird, und die Flasche wird im Bereich ihres Flaschenbauches gehalten mit dem Nachteil, daß der Schnitt verlaufen kann, weil der Abstand zwischen der Halterung am Flaschenbauch und der Schnittstelle am Flaschendom verhältnismäßig groß ist und Verwindungen bei der Schneidbewegung gestattet. Beim Schneiden entstehende Abfallpartikel werden mit Hilfe eines Stromes steriler Druckluft weggeblasen oder abgesaugt, wodurch wertvolle Sterilluft laufend verlorengeht. Für größere Flaschen kann ein Schnitt nicht präzise geführt werden.

Man hat daher schon versucht, ein Messer pneumatisch bewegbar an einem Schneidkopf so zu haltern, daß das Messer nach dem Festklemmen der Kunststoffflasche in ihrem unteren Bereich um den Dombereich herumgeführt wird. Auch in diesem Falle kann der Schnitt nicht präzise an der gewünschten Stelle eingeführt werden, weil die Flasche nicht genau zentriert ist und das durch das drehende Messer entstehende Drehmoment am Flaschenhals und -dom nicht ausgeglichen und aufgenommen wird. Außerdem bewegt sich das Messer unter Reibung über die seitlich herausstehende Überspritzhaut an dem Dom, die abgerissen werden und in das Flascheninnere hineinfallen kann. Nachteilig ist es auch, daß durch die Halterung der Flasche in ihrem unteren Bereich immer nur ein Flaschentyp verarbeitet werden kann und für das Abschneiden des Domes an einem anderen Flaschentyp vorher ein Umrüsten der Maschine erfolgen muß. Mit einer aufwendigen Konstruktion wird das pneumatisch betätigte Schneidmesser ein Stück weit in die zentrale Durchführung des Schneidkopfes eingeschoben, und die abgeschnittenen Teile und Abfallpartikel werden durch die zentrale Durchführung abgesaugt mit dem Nachteil der laufenden Verluste an steriler Luft. Der Schneidkopf und der Messerantrieb erfordern aufwendige, drehbare Konstruktionen und pneumatisch dichte Durchführungen.

Aus der US-A-5,201,788 ist eine Vorrichtung gemäß der im Oberbegriff des Anspruches 1 bezeichneten Art bekannt, bei der die Flaschen zwar auch in Haltemitteln gehalten werden, die Haltemittel aber nicht wirklich Zentrierfinger aufweisen. Im bekannten Fall erfolgt die Halterung einerseits von unten über anhebbare und absenkbare Stützplatten und andererseits von oben über drei übereinander angeordnete Klemmeinrichtungen. Jede Klemmeinrichtung besteht aus zwei Armen, die in ihrer Mitte an einer Drehwelle befestigt sind und mit benachbarten Klemmeinrichtungen zusammenwirken, die alle teilkreisbogenförmige Enden haben.

Der Erfindung liegt daher die Aufgabe zugrunde, die Vorrichtung zum Öffnen von Kunststoffflaschen mit den Merkmalen der eingangs beschriebenen Art hinsichtlich der Haltemittel und des Abtransports der abgeschnittenen Dome so zu verbessern, daß ein präzise ausgeführter Schnitt bei verschiedenen Flaschentypen und unter aseptischen Bedingungen erreicht wird.

Gelöst wird diese Aufgabe erfindungsgemäß für flaschenähnliche Verpackungen unterschiedlicher Kunststoffmaterialien dadurch, daß bei einer Vorrichtung gemäß dem Oberbegriff des Anspruchs 1 der Schneidkopf eine zentrale, den Schneidkopf mittig durchziehende Durchführung aufweist, durch welche abgeschnittene Dome transportiert werden, die Zentrierfinger näher an dem dem Schneidmesser zugewandten Ende des Schneidkopfes angeordnet sind als das Schneidmesser und die Haltemittel wenigstens einen, im Bereich der Zentrierfinger angeordneten, federnd belasteten Arretierstift aufweisen. In überraschender Weise kann eine Vielzahl von unterschiedlich ausgestalteten Kunststoffflaschen sehr präzise an der Stelle des Flaschenhalses mit einem Schnitt dort versehen werden, wo der Dom bzw. das abzuschneidende Teil des Domes (falls man einen Teil des Halses zum Dom hinzurechnet) von dem gesamten Flaschenkörper abgetrennt werden soll. Wie im bekannten Fall wird die jeweilige Kunststoffflasche zwar ebenfalls in Haltemitteln gehalten, erfindungsgemäß befinden sich diese Haltemittel aber an dem abzuschneidenden Teil des Domes; stehen also mit dem Dom in Eingriff, wenn dieser entlang der Schnittlinie als Ganzes von dem Hals der Kunststoffflasche abgeschnitten werden soll. Der Abstand zwischen der Halterung am Dom und der Schnittstelle ist um ein Vielfaches kürzer als der Abstand zwischen dem Boden der Flasche und dem Flaschenhals. Im Bereich der Schnittlinie aufgebrachte Schneidkräfte üben daher infolge des kurzen Hebelarmes zu der Eingriffstelle zwischen Dom und Haltemitteln mit Vorteil nur ein sehr kleines Drehmoment aus, so daß die Halterung des Domes bis zu der Schnittlinie mit großer Genauigkeit gewährleistet ist.

Die Haltemittel weisen mindestens zwei Zentrierfinger auf, welche wie Finger mit der Nut zwischen Flaschenhals und Dom auf vorzugsweise diametral gegenüberliegenden Seiten in Eingriff treten. Bei drei oder mehr Zentrierfingern ordnet man diese zweckmäßigerweise im wesentlichen gleichmäßig verteilt über den Umfang längs der kreisrunden Schnittlinie an.

Die Zentrierfinger sind radial bezüglich der mittig in der Vorrichtung befindlichen Durchführung beweglich. Die Zentrierfinger können also mit der äußeren Oberfläche im Grund der beschriebenen Nut zwischen Hals und Dom in Eingriff kommen oder durch radiales Herausfahren außer Eingriff gelangen. Es ist damit eine Halterung möglich, die auch wieder aufgehoben werden kann.

Die Zentrierfinger dienen zum einen der Zentrierung der jeweiligen Flasche. Sie dienen des weiteren aber auch der Positionierung der Schnittkante zum Schneidmesser. Der Abstand zwischen dem Grund der Nut oben am Flaschenhals, wo die Schnittlinie gelegt werden soll, einerseits und dem Schneidmesser andererseits wird bei der radialen Bewegung der Zentrierfinger festgelegt. Dieser Abstand kann bei einer bevorzugten Ausführungsform, die später noch beschrieben wird, durch Bewegen des Messers ebenfalls geändert werden. Besonders aber wird die Schnittlinie an der Flasche in axialer Richtung zum Messer durch die Zentrierfinger eingestellt.

Besonders günstig ist die weitere Wirkung der Zentrierfinger, daß diese das Drehmoment aufnehmen, welches durch den Schneidvorgang auf Flaschenhals und Dom ausgeübt wird.

Dadurch, daß die Zentrierfinger näher an dem flaschenseitigen Ende bzw. dem dem Schneidmesser zugewandten Ende des Schneidkopfes angeordnet sind als das Schneidmesser, wird der Flaschendom selbst in der beschriebenen Weise präzise gehalten mit der Aufnahmemöglichkeit des Drehmomentes und der axialen Einstellung der Schnittkantenlinie zum Messer.

Das Abschneiden unter Reinraumbedingungen erfolgt bei Füllmaschinen vorzugsweise ziemlich unmittelbar vor der Füllstation. Da es beim Füllen zweckmäßig ist, das Füllgut, vorzugsweise flüssiges Füllgut, insbesondere flüssige Lebensmittel, wie Milch oder Säfte, vertikal von oben nach unten zu führen, werden die zu füllenden Flaschen vertikal mit ihrer Öffnung nach oben angeordnet. Der Dom befindet sich dann oberhalb der Schneidlinie, auf deren Höhe auch das Schneidmesser angeordnet ist. "Näher am flaschenseitigen bzw. dem dem Schneidmesser zugewandten Ende des Schneidkopfes" bedeutet daher, daß die Zentrierfinger in diesem soeben beschriebenen, bevorzugten Ausführungsbeispiel mit etwa vertikaler Längsachse der Flasche und auch Längsachse des Schneidkopfes, "über" dem Schneidmesser angeordnet sind.

Die Halterung am Flaschendom (anstelle einer Halterung am Flaschenboden) bedeutet die Handhabung der Kunststoffflasche unabhängig von ihrer geometrischen Ausgestaltung. Man kann sich also Flaschen mit unterschiedlichem Querschnitt, kurze dicke Packungen oder auch lange dünne Flaschen vorstellen, die alle mit den erfindungsgemäßen Haltemitteln mit den Zentrierfingern präzise gehalten werden können, ohne daß zeitaufwendige Umrüstungen zwischen einem Typ Flasche einer ersten Gestalt auf einen zweiten Typ Flasche einer anderen Gestalt erforderlich wären.

Trotz dieser vereinfachten Benutzungsmöglichkeiten ist eine genaue Einstellbarkeit der Schnittlinie möglich, zumal der Bereich von Dom und Hals einer Kunststoffflasche bekanntlich eine feste Struktur hat.

Die Erfindung lehrt ferner, daß die Haltemittel zusätzlich wenigstens einen, im Bereich der Zentrierfinger angeordneten Arretierstift aufweisen. Der Dom wird durch eine flaschenseitig vorgesehene Aufnahmeöffnung an der Durchführung in diese hineingeschoben, und der Arretierstift kann dann in die entsprechende Ringnut eingreifen und den Dom mit Hals und Flasche nach unten unverlierbar haltern. Nach dem Abschneiden sorgt der wenigstens eine Arretierstift dafür, daß der abgeschnittene Dom in der Durchführung hängenbleibt, zunächst am flaschenseitigen Ende, welches bei vertikaler Anordnung der Durchführung das untere Ende ist. Der Arretierstift ist zweckmäßigerweise federbelastet angeordnet und kann eine Schräge so aufweisen, daß der jeweilige noch nicht abgeschnittene Dom beim Einführen desselben in die Durchführung den Arretierstift beiseite drückt, wonach dieser herausschnappt und in die betreffende Nut am Dom eingreift. Es versteht sich, daß zwei oder mehr Arretierstifte die Funktion verbessern. Die Arretierstifte können in gleicher Höhe und zwischen den Zentrierfingern angeordnet sein. Der Platzbedarf des neuen Schneidkopfes ist dadurch gering. Beim Nachschieben des nächsten, noch nicht von der Flasche abgeschnittenen Domes drückt dieser den durch den Arretierstift am flaschenseitigen Ende der Durchführung gehalterten Dom nach oben vom flaschenseitigen Ende der Durchführung weg. Auf diese Weise kann jeweils ein unterer Dom den abgeschnittenen darüber befindlichen Dom weiter nach oben in die Durchführung hochschieben. Es können ganze Stapel von abgeschnittenen Domen angesammelt und langsam oben aus der Durchführung herausgeschoben und danach abtransportiert werden, ohne daß man jeden Dom einzeln unter Verlust wertvoller steriler Druckluft absaugen müßte.

Gemäß der Erfindung ist es ferner zweckmäßig, wenn das Schneidmesser über eine parallel zu der Längsachse der Durchführung verlaufende, schwenkbar angetriebene Messerwelle radial zu der Durchführung bewegbar ist. Das Schneidmesser kann auf diese Weise von der Nut zwischen Flaschenhals und Dom, d.h. von dem Ort der Schnittlinie radial außer Eingriff gebracht werden, so daß die Werkstückteile in die Durchführung eingebracht, in ihr verschoben und/oder auch herausgenommen werden können; und andererseits können durch das umgekehrte radiale Hineinbewegen des Schneidmessers Beginn und Ende des Schneidvorganges genau bestimmt werden. Zwar kann man ein kreisrundes Schneidmesser vorsehen, welches in die Nut mit der Schnittlinie eingesenkt und zum Schneiden gebracht werden kann, bevorzugt ist aber eine Ausführungsform, bei welcher das Schneidmesser wenigstens teilweise gerade Kanten hat und diese, vorzugsweise an einem spitzen Ende, den Schneidvorgang durchführen.

Günstig ist es gemäß der Erfindung ferner, wenn die Messerwelle in einem ringförmigen Rotor gelagert ist, welcher einen die Durchführung enthaltenden Stator umgreift, und wenn der Rotor gegenüber dem Stator drehbar angetrieben ist. Die Kunststoffflasche mit Hals und Dom kann dann im Stator präzise gehalten werden, während der Rotor mit der Messerwelle und dem an dieser angebrachten Schneidmesser am Umfang um den drehfest gehaltenen Dom herum geführt wird. Auf diese Weise wird der Schneidvorgang eines kreisrunden oder geraden Schneidmessers entlang der für den Schnitt vorgesehenen Linie bewegt werden.

Erfindungsgemäß kann weiterhin das Schneidmesser durch wenigstens zwei gerade Kanten gebildet sein, von denen eine eine Schneidkante ist und die andere Kante unter einem Winkel schneidet, der vorzugsweise etwa 90° beträgt und besonders bevorzugt kleiner als 90° ist. Im Gegensatz zu dem kreisrunden Schneidmesser ist die bevorzugte Ausführungsform in Draufsicht dreieckig oder trapezförmig. Blickt man auf das flache Schneidmesser, dann erkennt man wenigstens zwei gerade Kanten, die sich unter einem Winkel von zum Beispiel 40 - 60° schneiden. Eine sehr zweckmäßige Ausgestaltung des Schneidmessers hat sich dann ergeben, wenn die eine der beiden sich schneidenden Kanten eine Schneidkante ist, während die andere stumpf bleiben kann. Ein solches ebenes Schneidmesser mit wenigstens zwei geraden Kanten läßt sich über einen Messerhalter schnell und einfach auswechselbar an der Messerwelle befestigen, mit deren Hilfe das Schneidmesser in und außer Eingriff mit dem Werkstück bewegt werden kann.

Auch ist es vorteilhaft, wenn bei weiterer Ausgestaltung der Erfindung die Schneidkante durch zwei sich unter einem zweiten spitzen Winkel schneidende Schneidebenen gebildet ist und parallel sowie im Abstand von der oberen und unteren Ebene des Schneidmessers verläuft. Dieses bevorzugte, ebene Schneidmesser hat selbstverständlich eine endliche Dicke, weshalb es eine obere und parallel dazu eine untere Ebene gibt. Um eine Schneidkante zu haben, werden wenigstens an dieser einen Kante zwei Ebenen gebildet, zum Beispiel durch Schmieden, Stanzen, Schleifen. Die dadurch entstehenden Ebenen sind hier Schneidebenen genannt. Die eine geht von der oberen Oberfläche des Schneidmessers und die andere von der unteren Ebene desselben aus. Beide schneiden sich unter dem zweiten spitzen Winkel, der eine Größe von 3° bis 30°, vorzugsweise 5° bis 10° hat. Die zwei Schneidebenen schneiden sich unter Bildung der gewünschten Schneidkante etwa in der Mitte zwischen der oberen und unteren Ebene des Messers. Es hat sich gezeigt, daß man mit einem derartig hergestellten Schneidmesser einen besonders sauberen Schnitt erzeugt. Auch beim Umlaufen um den Flaschendom verläuft der Schnitt mit Vorteil nicht. Bei Einsetzen der erfindungsgemäßen Vorschläge mit den Winkelmaßen wird das Kunststoffmaterial durch das Schneidmesser nicht stark verdrängt. Dabei ist es bevorzugt, wenn die Eindringtiefe der Messerspitze etwa gleich der Materialdicke ist. Die Spitze des Schneidmessers (an dem Ende der Schneidkante) wird zu Beginn des Schneidvorganges an der Stellung 0° in das Material so weit eingestochen, daß gerade die gesamte Materialdicke durchstochen ist. Sodann beginnt die Drehung des Rotors, das Messer wird entlang der Nut herumgeführt, so daß nach Durchlaufen von 360° der Schnitt fertiggestellt ist.

Ein solches Schneidmesser gemäß der Erfindung erlaubt den Schnitt präzise an der gewünschten Linie ohne Entwicklung von Schneidstaub, die Entstehung von Abfallpartikeln oder anderen Abfallteilen. Es fallen daher keine Abfallpartikel in die innen steril gehaltene Flasche. Dadurch ist der Einsatz der erfindungsgemäßen Vorrichtung unter aseptischen Bedingungen besonders günstig möglich. Sobald der Schnitt vollendet ist, wird durch eine Bewegung des Schneidkopfes relativ zu der Flasche letztere von dem abgeschnittenen Dom weg geführt und gelangt dann in die Füllstation.

Eine weitere bevorzugte Ausführungsform der Erfindung ist dadurch gekennzeichnet, daß die Steuerung der radialen Schwenkbewegung des Schneidmessers über eine mit der Messerwelle drehbar verbundene Steuerrolle erfolgt, welche bei Drehung der Rotors eine drehfest am Stator befestigte Steuerkurve umläuft. Während an dem flaschenseitigen Ende des Stators ein Messerhalter an der Messerwelle (unten) angebracht ist und in der oben beschriebenen Weise (radial durch Betätigung der Messerwelle; und längs des Umfangs durch Drehen des Rotors) bewegt wird, erfolgt die Betätigung und Schwenkung der Messerwelle dadurch, daß die an dem gegenüberliegenden Ende (oben) der Messerwelle angelenkte Steuerrolle über die Steuerkurve fährt. Die Steuerkurve ist dabei drehfest am Stator angebracht, und die Steuerrolle, die vorzugsweise über einen Steuerarm mit der Messerwelle verbunden ist, ist durch die Lagerung in dem Rotor relativ zu der Steuerkurve bewegbar. Dabei sollte beachtet werden, daß in der bevorzugten Ausführungsform beim radialen Herausschwenken der Steuerrolle von der Längsachse der Durchführung weg die Spitze des Schneidmessers in entgegengesetzter Richtung auf den Flaschendom bzw. dessen Nut hin bewegt wird. Man kann die Steuerkurve entsprechend ausgestalten und damit winkelabhängig eine exakte Bewegung des Schneidmesser relativ zu dem präzise am Stator festgehaltenen Flaschendom erreichen.

Bei weiterer vorteilhafter Ausgestaltung der Erfindung hat die ringförmig die Durchführung im Abstand umziehende Steuerkurve in radialer Richtung eine Ausnehmung, und ein kreisförmiger Steuerring ist drehfest und gegenüber der Steuerkurve axial beweglich vorgesehen, wobei der Außendurchmesser des Steuerringes etwa gleich groß dem größten Außendurchmesser der Steuerkurve ist. Um die Lage der Ausnehmung in der Steuerkurve zu beschreiben, kann man sich eine kreisrunde Scheibe vorstellen, deren Umfang an einer Stelle mehr oder weniger stark eingedellt ist. Diese Delle entspricht der Ausnehmung. Der Umfang der Kreisscheibe ist also durch die Ausnehmung unterbrochen. Bei der bevorzugten Ausführungsform ist die Scheibe eine - bis auf die Ausnehmung - kreisrunde, ringförmige Steuerkurve. Durch diesen zentralen Steuerring erstreckt sich die Durchführung, in welcher die abgeschnittenen Dome hochgeschoben und entsorgt werden.

Der Sinn dieser Ausnehmung ist es, für das Einsetzen und/oder Herausnehmen des Flaschendomes das Schneidmesser radial herausbewegt halten zu können, während der Flaschenhals und/oder der Dom axial zur Flasche an dem Messer vorbei nach oben und unten bewegt werden. Dieser Vorteil der Ausnehmung hätte ohne den erwähnten Steuerring den Nachteil, daß das Schneidmesser nicht einen vollständig über 360° herumlaufenden Schnitt durchführen könnte. Der axial bewegliche Steuerring überbrückt die Ausnehmung in einem bestimmten Betriebszustand, so daß das Schneidmesser in jedem Falle den über mindestens 360° sich erstreckenden Schnitt durchführen kann.

Im Bereich der Ausnehmung hat sich der Außendurchmesser der Steuerkurve erheblich verringert. Außerhalb der Ausnehmung ist der Umfang der Steuerkurve aber kreisrund. In diesem Bereich ist der Außendurchmesser des Steuerringes gleich groß dem Außendurchmesser der Steuerkurve. Durch Heranfahren des Steuerringes an die Steuerkurve kann also mit Vorteil für die Steuerrolle eine kreisrunde Steuerkurve simuliert werden; und gleichwohl besteht nach dem axialen Wegbewegen des Steuerringes von der Steuerkurve dann die gewünschte Ausnehmung zur Verfügung, um das Schneidmesser bei Be- und Entladen aus dem Betriebseingriff heraushalten zu können.

Man erkennt, daß die erfindungsgemäße Vorrichtung einen in sich geschlossenen und für sich allein funktionsfähigen Schneidkopf schafft. Dieser kann unabhängig von der übrigen Ausgestaltung der Maschine oder Ausgestaltung der Bearbeitungsstation eingesetzt und zur Bearbeitung (Abschneiden des Domes) der Kunststoffflasche angewendet werden. Eine leistungsstarke Maschine zum aseptischen Herstellen und Befüllen einer Kunststoffflasche gibt in aller Regel eine die Flasche umgebende Maschinenstruktur vor, die beim Umrüsten von einem Flaschentyp auf den anderen erhebliche Änderungen derjenigen Maschinenteile erfordern würde, die mit der Kunststoffflasche in Eingriff kommen, wenn die Halterung und die Schneidtätigkeit von anderen als den einfach aufgebauten Vorrichtungsteilen gemäß der Erfindung vorgenommen würden. Deshalb ist der Schneidkopf mit seiner universellen Anwendbarkeit für Flaschen mit einer Vielzahl von unterschiedlichen Formen als für sich allein funktionsfähige Einheit anwendbar, zumal Flaschenhals und Dom für eine Vielzahl unterschiedlich ausgestalteter Flaschen standardisiert ist.

Man erkennt, daß der erfindungsgemäße Schneidkopf auch deshalb gut unter aseptischen Bedingungen eingesetzt werden kann, weil er leicht zu reinigen und auch leicht zu sterilisieren ist. Den sauberen Schnitt am Hals der Flasche erreicht man durch die gute Halterung am Flaschendom. Außerdem ist mit Vorteil eine einfache Justage für die Schnittlinie möglich.

Es werden erfindungsgemäß wenige bewegte und kaum verwinkelte Teile eingesetzt, weshalb die Sterilisierung einfach ist und der aseptische Betrieb möglich wird. Versuche mit zum Teil eingefärbten Zwischenschichten bei dem Flaschenmaterial haben gezeigt, daß Abfall- oder andere Schneidpartikel nach Vollendung des Schnittes nicht in die geöffnete Flasche fallen.

Weitere Vorteile, Merkmale und Anwendungsmöglichkeiten der vorliegenden Erfindung ergeben sich aus der folgenden Beschreibung bevorzugter Ausführungsformen in Verbindung mit den anliegenden Zeichnungen. Bei diesen zeigen:
- Figur 1: eine Seitenansicht des Schneidkopfes mit unten eingesetztem Flaschenhals und vor dem Schnitt an diesem noch angebrachtem Flaschendom, wobei der Stator an einer nicht gezeigten Halteplatte befestigt und eine Dichtplatte für die Trennung zwischen Reinraum und normaler Umgebung abgebrochen dargestellt ist,
- Figur 2: eine perspektivische und mittig geschnittene Ansicht des Schneidkopfes ähnlich der Figur 1, wobei zusätzlich notwendige Vorrichtungsteile gezeigt sind, die in Figur 1 weggelassen waren,
- Figur 3: eine perspektivische und teilweise ausgeschnittene Ansicht des Schneidkopfes,
- Figur 4: eine perspektivische Außenansicht des oberen Teils des Schneidkopfes, bei dem hier Steuerkurve und Steuerring zur Verdeutlichung anderer Vorrichtungsteile weggelassen sind,
- Figur 5: eine perspektivische Draufsicht auf die Unterseite des Schneidkopfes, etwa wenn man in den Figuren 2 und 3 von unten nach oben blickt,
- Figur 6: die Draufsicht auf eine bevorzugte Ausführungsform des Schneidmessers,
- Figur 7: eine abgebrochene Schnittansicht des Schneidmessers entlang der Linie VII-VII in Figur 6 und
- Figur 8: schematisiert die Draufsicht auf eine ringförmige Steuerkurve mit einer Ausnehmung, wobei sich diese an ihrem Umfang befindet.

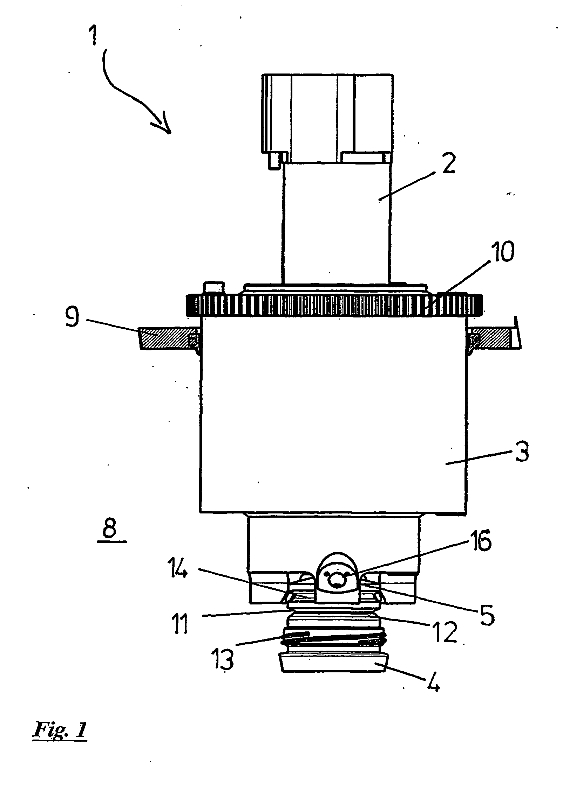

Zwar erkennt man aus Figur 1 den allgemein mit 1 bezeichneten Schneidkopf in seinem Gesamtaufbau deutlich, es sind aber das Schneidmesser, seine Steuerungseinrichtungen und pneumatische Antriebe zwecks Klarheit weggelassen. Der Schneidkopf 1 besteht im wesentlichen aus dem mittig angeordneten Stator 2 und einem diesen umgebenden Rotor 3, an dem unten Hals 4 und Dom 5 einer nicht dargestellten Kunststoffflasche gehalten sind. Bei der hier gezeigten Ausführungsform steht die nicht dargestellte Kunststoffflasche im Lot, so daß deren Längsmittelachse mit der Längsachse 6 der Durchführung 7 zusammenfällt, wobei auch die Längsachse 6 in der Vertikalen liegt. Der Reinraum 8 der gesamten Maschine befindet sich unterhalb der abgebrochen und im Schnitt dargestellten stationären Dichtplatte 9, über der normale Atmosphäre herrscht. Der Zahnkranz 10, der fest auf dem Rotor 3 sitzt und für dessen Drehantrieb sorgt, befindet sich daher oberhalb der Dichtplatte 9, d.h. nicht im Reinraum, in welchem die sterilen Kunststoffflaschen über nicht dargestellte Förderer bewegt werden. Zwischen dem weiter unten befindlichen Hals 4 und dem darüber angeordneten Dom 5 der Kunststoffflasche ist in dem Gesamtaufbau mit fester Struktur eine Nut 11 eingebracht, an deren Grund der Ort für die eigentliche Schnittlinie 12 liegt. Das Verschlußgewinde des Halses 4 ist mit 13 bezeichnet. Zwischen Dichtplatte 9 und Rotor 3 befindet sich eine Ringdichtung 9'.

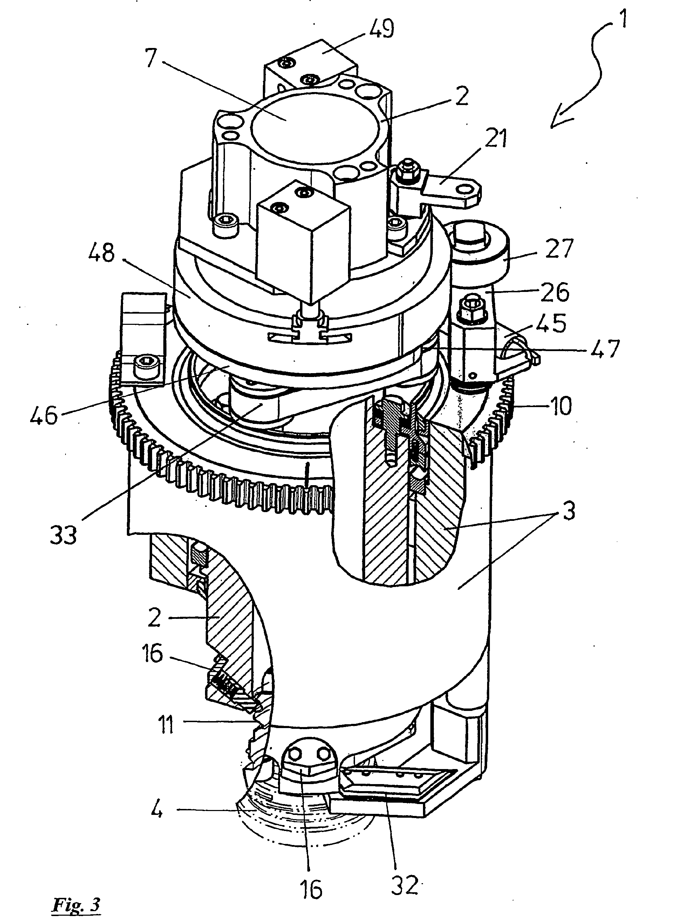

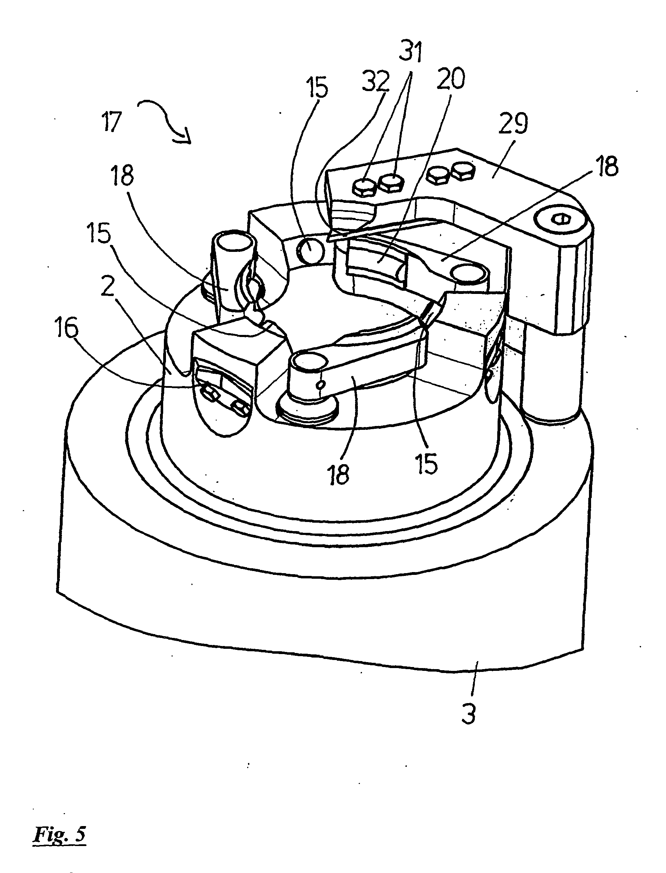

Die Oberfläche des Flaschendomes 5 hat eine feste, vorgegebene Struktur mit einer Haltenut 14, in welcher nachfolgend noch zu beschreibende Haltemittel eingreifen. Zum Beispiel weisen diese Haltemittel drei Arretierstifte 15 auf, deren Befestigung 16 zum Beispiel mit einer Platte (Figur 3) in den Figuren 1 und 3 gezeigt ist. In Figur 3 sieht man auch den federnd belasteten Arretierstift 15, wie er in die Haltenut des Domes 5 eingreift. Blickt man von unten von dem in Figur 5 gezeigten und allgemein mit 17 bezeichneten flaschenseitigen Ende des Stators 2 in die Durchführung 7, dann sieht man alle drei Arretierstifte 15 deutlich. Ihre Funktion ist derart, daß man den Dom 5 nach oben in Richtung der Längsachse 6 der Durchführung 7 in letztere hineinschieben kann, so daß die Arretierstifte 15 in die Haltenut 14 einschnappen und verhindern, daß man den Dom 5 aus dieser Position wieder nach unten herausziehen kann.

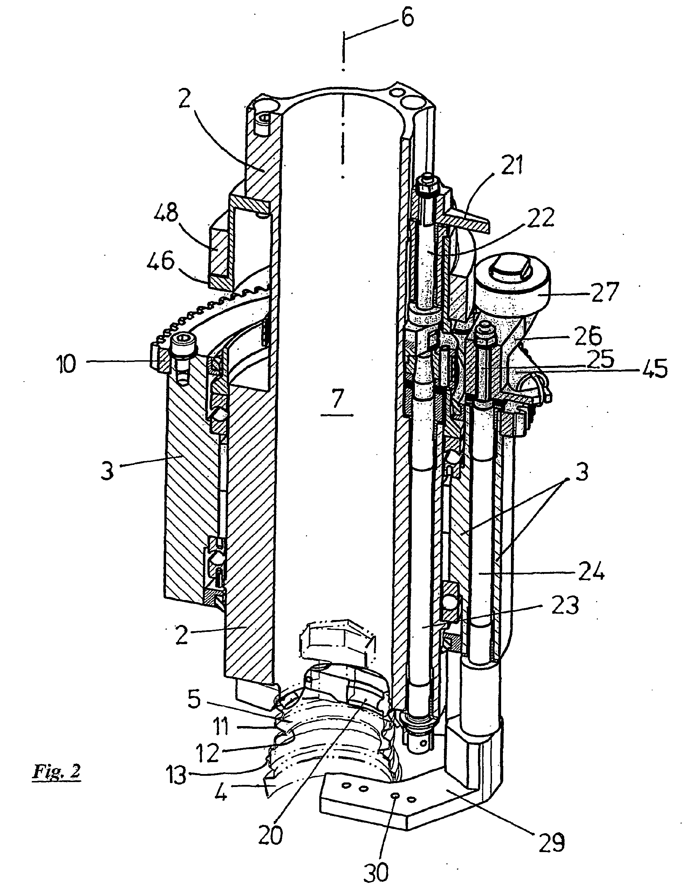

Außer den Arretierstiften 15 weisen die Haltemittel aber auch drei Zentrierfinger 18 auf. Bei diesen handelt es sich jeweils um einen am unteren, flaschenseitigen Ende einer Zentrierfingerwelle 19 schwenkbar angebrachten Arm, auf dessen Innenseite ein wulstförmiger Vorsprung 20 befestigt ist. Dieser liegt auf gleicher Höhe wie die Arretierstifte 15 und ist daher in der Lage, in die Haltenut 14 des Domes 5 einzugreifen und bei mäßiger Klemmung für eine präzise Halterung der gesamten Kunststoffflasche über den Dom 5 zu sorgen. Die stärker klemmenden Zentrierfinger 18 nehmen ein auf die Flasche aufgebrachtes Drehmoment auf, so daß die Halterung des Domes 5, damit des Halses 4 und damit der ganzen Kunststoffflasche präzise, definiert und zuverlässig gegeben ist. In Figur 2 ist auch eine weitere Ringdichtung 23 zwischen Rotor 3 und Stator 2 angeordnet.

Geöffnet werden die Zentrierfinger 18, d.h. radial bezüglich des Domes 5 werden diese jeweils herausgeschwenkt, indem der Antriebshebel 21 über die Antriebswelle 22 die Zentrierfingerwelle 19 von oben gesehen im Uhrzeigersinn schwenkt. Umgekehrt erfolgt dann entsprechend die Klemmung der Zentrierfingermechanik, für welche die wulstförmigen Vorsprünge 20 radial in die Haltenut 14 des Domes 5 einfahren.

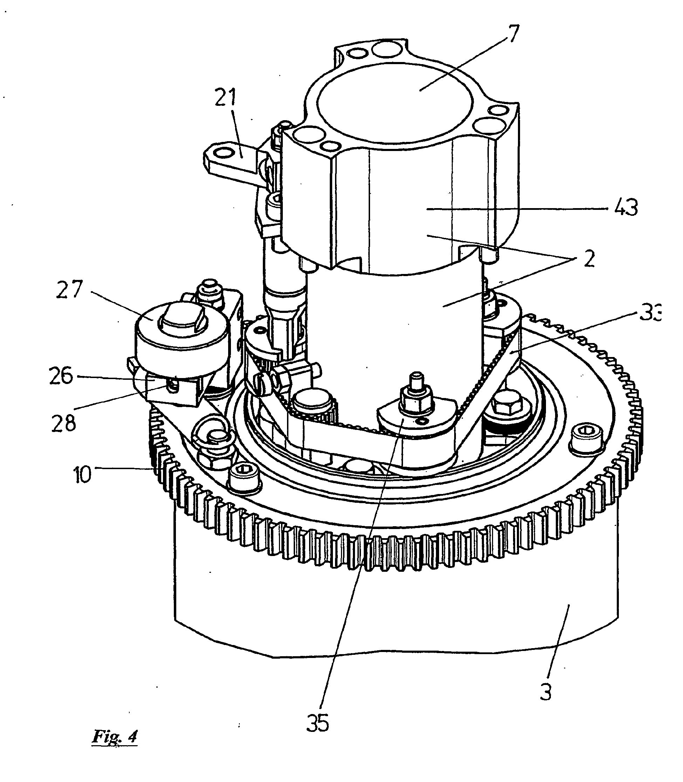

Während die Zentrierfingerwelle 19 in dem festen Stator 2 gelagert ist, ist in dem drehbaren Rotor 3 eine Messerwelle 24 spielfrei gelagert. Über das Vierkantende 25 der Messerwelle 24 ist letztere mit dem Steuerarm 26 verbunden, an dessen dem Vierkantende 25 gegenüberliegenden Ende eine Steuerrolle 27 drehbar angelenkt ist. In der Darstellung der Figur 4 erkennt man eine Justierschraube 28 in dem Steuerarm 26, mit deren Hilfe die Schneidtiefe und das (bezüglich der Längsachse 6 der Durchführung 7) radiale Eintauchen des Messers justiert werden kann. Am unteren Ende der Messerwelle 24 ist ein winkelig ausgestalteter Messerhalter 29 angebracht, auf dem über in die Löcher 30 im Messerhalter eingesteckte Schrauben 31 (Figur 5) ein Schneidmesser 32 befestigt werden kann. Die in Richtung der Längsachse 6 gemessene Schneidhöhe ist fest.

In den Figuren 3 und 4 ist ein den Stator umlaufender Zahnriemen 33 dargestellt, der über eine Spannrolle 34 und am Ende 35 der Zentrierfingerwelle über das mit den Zähnen in Eingriff stehende Ritzel die Zentriefingerwelle 19 antreibt. Es versteht sich, daß der Zahnriemen 33 alle drei Zentrierfingerwellen 19 antreibt. Es geht hier um Schwenkbewegungen in der Größenordnung von 20°.

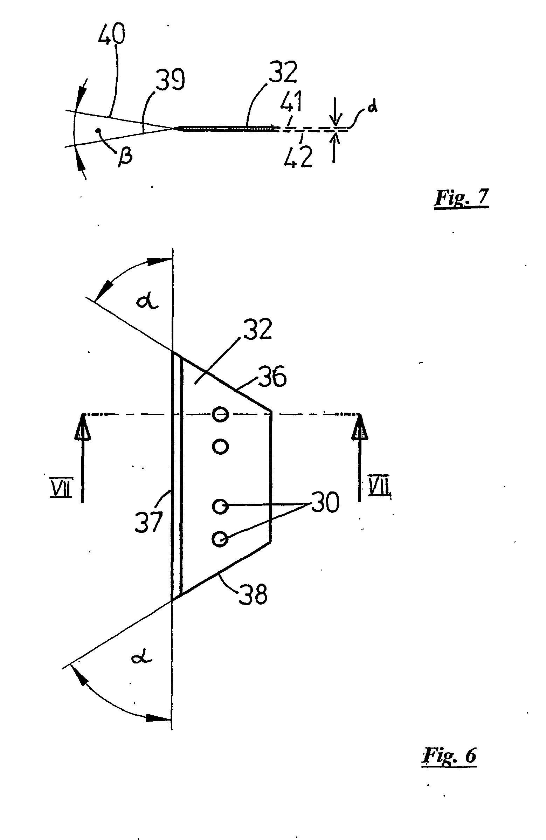

Das Schneidmesser 32 ist in den Figuren 6 und 7 herausgezeichnet. Auch hier sind die Löcher 30 für das Durchstecken der Schrauben 31 dargestellt. Das Schneidmesser 32 ist durch drei gerade Kanten 36, 37 und 38 gebildet. Die mittlere Kante 37 ist die Schneidkante. Diese wird von den benachbarten Kanten 36 und 38, die stumpf sind, unter einem Winkel α von 55° geschnitten. Blickt man entsprechend der Schnittlinie VII-VII der Figur 6, dann sieht man die Querschnittsansicht des Schneidmessers 32 in Figur 7. Der dort gezeigte zweite spitze Winkel β beträgt 8° und entsteht dadurch, daß die in Figur 7 obere, schräge Schneidebene 39 unter dem besagten zweiten spitzen Winkel β die schräge untere Schneidebene 40 schneidet. Die Dicke des Messers d wird gemäß Figur 7 durch den Abstand der oberen Ebene 41 von der unteren Ebene 42 des Schneidmessers 32 definiert. Die eigentliche Schneidkante 37 liegt in einer Ebene zwischen diesen beiden Ebenen 41 und 42.

Über den in den Figuren 3 und 4 oben gezeichneten Befestigungsblock 43 und die in diesem vorgesehenen Bohrungen 44 wird der Stator 2 an einer nicht gezeigten Halteplatte angebracht.

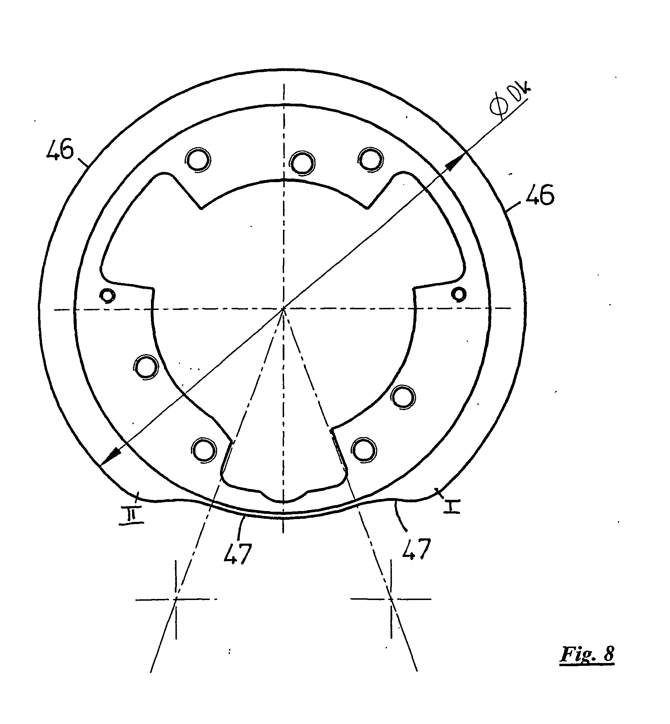

Die Messerwelle 24 mit der oben angebrachten Steuerrolle 27 und dem unten angebrachten Messerhalter 29 wurde schon beschrieben. Der Steuerarm 26 mit der Steuerrolle 27 wird mit Hilfe der Zugfeder 45 in Anlage an eine drehfest am Stator 2 angebrachte Steuerkurve 46 gedrückt. Sie ist auf dem größten Teil ihres Umfanges kreisrund, hat in radialer Richtung aber eine Ausnehmung 47, die in Verbindung mit Figur 8 noch beschrieben wird.

Damit zum Be- und Entladen der Kunststoffflasche mit Hals 4 und Dom 5 in Richtung parallel zur Längsachse 6 der Durchführung 7 das Schneidmesser 32 nicht im Weg steht, ist die Ausnehmung 47 vorgesehen, die es erlaubt, daß die Steuerrolle 27 radial etwas näher an die mittlere Längsachse 6 herangefahren und dort gehalten werden kann, d.h. das Schneidmesser 32 außer Eingriff genommen und auch dort gehalten werden kann. Bei der Betrachtung der Figur 8 kann man sich vorstellen, daß die Steuerrolle 27 mit der Steuerkurve 46 (Außenumfang) laufend (durch die Feder 45 gezogen) in Berührung steht. Von der Position I am Ende der Ausnehmung 47 verläuft die Steuerkurve 46 im Gegenuhrzeigersinn auf einer Kreisbahn mit dem Außendurchmesser Dk (Durchmesserkurve) bis zu der Position II, bei welcher bei weiterer Drehung die Ausnehmung 47 beginnt. Der Messerhalter 29 ist nun so zu der Steuerrolle 27 justiert, daß auf dem gesamten Teilkreisweg zwischen den Positionen I und II (im Gegenuhrzeigersinn) das Schneidmesser 32 in Eingriff mit dem zu schneidenden Kunststoff steht.

Da ein Schnitt wenigstens 360° entsprechen muß, ist die kürzere Strecke auf der Steuerkurve 46 zwischen den Positionen I und II so zu überbrücken, daß auch dort die Steuerrolle 27 auf einer äußeren Fläche abrollt, welche dem Durchmesser Dk entspricht. Für diese Maßnahme ist ein Steuerring 48 vorgesehen, den man deutlich in den Figuren 2 und 3 erkennt. Er kann in vertikaler Richtung parallel zur Längsachse 6 aus der in den Figuren 2 und 3 gezeigten unteren Position mit Hilfe der pneumatischen Antriebe 49 so weit nach oben gezogen werden, daß die Steuerrolle 27 der Ausnehmung 47 folgen würde, wenn sie von der Position II im Gegenuhrzeigersinn weiter zu der Position I bewegt würde. Diese Ausnehmung 47 wird für die Steuerrolle 27 sozusagen ausgeschaltet, wenn der Steuerring 48 in die in den Figuren 2 und 3 gezeigte Position abgesenkt wird. Dann nämlich rollt die Steuerrolle 27 auf der kreisringförmigen Oberfläche des Steuerringes 48 ab, dessen Durchmesser auf dem größten Teil der Steuerkurve 46 (Figur 8 oben) gleich ist dem Außendurchmesser Dk (Durchmesserkurve) der Steuerkurve 46.

Ist es also beabsichtigt, den Schnitt entlang der Nut 11 durchzuführen, dann dreht man die Steuerrolle 27 entsprechend Figur 8, beginnend von der Position I (0°) und dreht den Rotor 3 im Gegenuhrzeigersinn, so daß entsprechend die Steuerrolle 27 auf der Teilkreisringfläche der Steuerkurve 46 nach links bis zur Position II rollt. Während dieses gesamten Weges erfolgt der Schneidvorgang, und gleichzeitig wird der Steuerring 48 mit Hilfe der pneumatischen Antriebe 49 in die Position der Figuren 2 und 3 heruntergefahren. Die Steuerrolle 27 rollt auf dem äußeren Kreisumfang des Steuerringes 48 über den Bereich des kurzen Abstandes zwischen den Positionen II und I, wonach der Schnitt vollendet ist. Dennoch dreht der Rotor 3 weiter, die Steuerrolle 27 läuft nochmals über die Steuerkurve 46 im Gegenuhrzeigersinn, wobei jetzt der Steuerring 48 axial nach oben gezogen wird. Gelangt die Steuerrolle 27 wieder in den Bereich der Position II, dann rollt sie von da an nach unten in die Ausnehmung 47, wo die Schnittfunktion beendet ist. Das Schneidmesser 32 ist außer Schneideingriff herausgefahren. Der Dom 5 ist vom Hals 4 abgeschnitten, die Flasche kann nach unten weggenommen bzw. der Schneidkopf 1 nach oben abgezogen werden, um danach eine neue Flasche einzufahren, so daß sich der Vorgang wiederholt.

### Bezugszeichenliste

- 1: Schneidkopf
- 2: Stator
- 3: Rotor
- 4: Hals
- 5: Dom
- 6: Längsachse der Durchführung
- 7: Durchführung
- 8: Reinraum
- 9: Dichtplatte
- 9': Ringdichtung
- 10: Zahnkranz
- 11: Nut
- 12: Schnittlinie
- 13: Verschlußgewinde
- 14: Haltenut
- 15: Arretierstift
- 16: Befestigung der Arretierstifte
- 17: flaschenseitiges Ende
- 18: Zentrierfinger
- 19: Zentrierfingerwelle
- 20: wulstförmiger Vorsprung
- 21: Antriebshebel
- 22: Antriebswelle (Verlängerung der Zentrierfingerwelle)
- 23: Ringdichtung
- 24: Messerwelle
- 25: Vierkantende
- 26: Steuerarm
- 27: Steuerrolle
- 28: Justierschraube
- 29: Messerhalter
- 30: Löcher
- 31: Schrauben
- 32: Schneidmesser
- 33: Zahnriemen
- 34: Spannrolle
- 35: Ende der Zentrierfingerwelle
- 36,37,38: gerade Kanten des Schneidmessers
- 39: obere Schneidebene
- 40: untere Schneidebene
- 41: obere Ebene des Schneidmessers
- 42: untere Ebene des Schneidmessers
- 43: Befestigungsblock
- 44: Bohrung
- 45: Zugfeder
- 46: Steuerkurve
- 47: Ausnehmung
- 48: Steuerring
- 49: pneumatischer Antrieb

- Dk: Durchmesser Steuerkurve

## Patentansprüche

1. Vorrichtung zum Öffnen von durch zu geschmolzene Dome (5) luftdicht verschlossenen geblasenen, mit einem Verschlußgewinde (13) versehenen, in Haltemitteln (15, 18) befindlichen Kunststoffflaschen durch Abschneiden des Domes (5) mit einem relativ zu dem Dom (5) längs dessen Umfang bewegbaren, in einem Schneidkopf (1) gelagerten Schneidmesser (32), wobei die Haltemittel (15, 18) für den Eingriff mit dem abzuschneidenden Teil des Domes (5) mindestens zwei radial zu dem Dom (5) bewegbare Zentrierfinger (18) aufweisen, **dadurch gekennzeichnet, daß** der Schneidkopf (1) eine zentrale, den Schneidkopf (1) mittig durchziehende Durchführung (7) aufweist, durch welche abgeschnittene Dome (5) transportiert werden, daß die Zentrierfinger (18) näher an dem dem Schneidmesser (32) zugewandten Ende des Schneidkopfes (1) angeordnet sind als das Schneidmesser (32) und daß die Haltemittel (15, 18) wenigstens einen, im Bereich der Zentrierfinger (18) angeordneten, federnd belasteten Arretierstift (15) aufweisen.

2. Vorrichtung nach Anspruch 1, **dadurch gekennzeichnet, daß** das Schneidmesser (32) über eine parallel zu der Längsachse (6) der Durchführung (7) verlaufende, schwenkbar angetriebene Messerwelle (24) radial zu der Durchführung (7) bewegbar ist.

3. Vorrichtung nach Anspruch 1 oder 2, **dadurch gekennzeichnet, daß** die Messerwelle (24) in einem ringförmigen Rotor (3) gelagert ist, welcher einen die Durchführung (7) enthaltenen Stator (2) umgreift, und daß der Rotor (3) gegenüber dem Stator (2) drehbar angetrieben ist.

4. Vorrichtung nach einem der Ansprüche 1 bis 3, **dadurch gekennzeichnet, daß** das Schneidmesser (32) durch wenigstens zwei gerade Kanten (36, 37, 38) gebildet ist, von denen eine eine Schneidkante (37) ist und die andere Kante (36, 38) unter einem Winkel (α) schneidet, der vorzugsweise etwa 90° beträgt und besonders bevorzugt kleiner als 90° ist.

5. Vorrichtung nach Anspruch 4, **dadurch gekennzeichnet, daß** die Schneidkante (37) durch zwei sich unter einem zweiten spitzen Winkel (β) schneidende Schneidebenen (39, 40) gebildet ist und parallel sowie im Abstand von der oberen (41) und unteren (42) Ebene des Schneidmessers (32) verläuft.

6. Vorrichtung nach einem der Ansprüche 1 bis 5, **dadurch gekennzeichnet, daß** die Steuerung der radialen Schwenkbewegung des Schneidmessers (32) über eine mit der Messerwelle (24) drehbar verbundenen Steuerrolle (27) erfolgt, welche bei Drehung des Rotors (3) eine drehfest am Stator (2) befestigte Steuerkurve (46) umläuft.

7. Vorrichtung nach einem der Ansprüche 1 bis 6, **dadurch gekennzeichnet, daß** die ringförmig die Durchführung (7) im Abstand umziehende Steuerkurve (46) in radialer Richtung eine Ausnehmung (47) hat und ein kreisförmiger Steuerring (48) drehfest und gegenüber der Steuerkurve (46) axial beweglich vorgesehen ist, wobei der Außendurchmesser des Steuerringes (48) etwa gleich groß dem größten Außendurchmesser (Dk) der Steuerkurve (46) ist.

## Claims

1. A device for opening blown plastic bottles which have been air-tightly closed by domes (5) fused shut and which are provided with a closure screwthread (13) and which are disposed in holding means (15, 18) by cutting off the dome (5) with a cutting blade (32) which is mounted in a cutting head (1) and which is movable relative to the dome (5) along the periphery thereof, wherein the holding means (15, 18) for engagement with the portion of the dome (5) which is to be cut off have at least two centering fingers (18) which are movable radially relative to the dome (5), **characterized in that** the cutting head (1) has a central passage (7) which passes centrally through the cutting head (1) and through which cut-off domes (5) are transported, that the centering fingers (18) are arranged closer to the end (17) of the cutting head (1) that is towards the cutting blade (32) than the cutting blade (32) and that the holding means (15, 18) have at least one spring-loaded arresting pin (15) arranged in the region of the centering fingers (18).

2. A device according to claim 1 **characterized in that** the cutting blade (32) is movable radially relative to the passage (7) by way of a pivotably driven blade shaft (24) extending parallel to the longitudinal axis (6) of the passage (7).

3. A device according to claim 1 or claim 2 **characterized in that** the blade shaft (24) is mounted in an annular rotor (3) which embraces a stator (2) including the passage (7) and that the rotor (3) is driven rotatably with respect to the stator (2).

4. A device according to one of claims 1 to 3 **characterized in that** the cutting blade (32) is formed by at least two straight edges (36, 37, 38) of which one is a cutting edge (37) and intersects the other edge (36, 38) at an angle (α) which is preferably approximately 90° and particularly preferably less than 90°.

5. A device according to claim 4 **characterized in that** the cutting edge (37) is formed by two cutting planes (39, 40) which intersect at a second acute angle (β) and extends parallel to and at a spacing from the upper (41) and lower (42) planes of the cutting blade (32).

6. A device according to one of claims 1 to 5 **characterized in that** control of the radial pivotal movement of the cutting blade (32) is effected by way of a control roller (27) which is rotatably connected to the blade shaft (24) and which upon rotation of the rotor (3) passes around a control cam (46) non-rotatably fixed to the stator (2).

7. A device according to one of claims 1 to 6 **characterized in that** the control cam (46) which extends in an annular configuration at a spacing around the passage (7) has an opening (47) in the radial direction and there is provided a circular control ring (48) non-rotatably and axially movably with respect to the control cam (46), wherein the outside diameter of the control ring (48) is approximately equal to the largest outside diameter (Dk) of the control cam (46).

## Revendications

1. Dispositif d'ouverture de bouteilles en matière plastique qui sont fermées de façon étanche à l'air par des dômes scellés (5), qui sont dotées d'un filetage de fermeture (13) et qui se trouvent dans des moyens de retenue (15, 18), l'ouverture étant réalisée en coupant le dôme (5) avec un couteau (32) mobile par rapport au dôme (5) le long du bord périphérique de celui-ci et monté dans une tête de coupe (1), les moyens de retenue (15, 18) comportant au moins deux doigts de centrage (18) mobile radialement par rapport au dôme (5) en vue de l'engagement avec la partie à couper du dôme (15), **caractérisé en ce que** la tête de coupe (1) comporte une passage central (7) qui est ménagé au centre de la tête de coupe (1) et qui permet de transporter les dômes coupés (5), **en ce que** les doigts de centrage (18) sont disposés plus près de l'extrémité de la tête de coupe (1) qui est dirigée vers le couteau (32), que du couteau (32) et **en ce que** les moyens de retenue (15, 18) comportent au moins un goujon d'arrêt (15) qui est rappelé élastiquement et qui est disposé dans la région des doigts de centrage (18).

2. Dispositif selon la revendication 1, **caractérisé en ce que** le couteau (32) est mobile radialement par rapport au passage (7) au moyen d'un arbre de couteau (24) qui s'étend parallèlement à l'axe longitudinal (6) du passage (7) et qui est entraîné de manière à pouvoir pivoter.

3. Dispositif selon la revendication 1 ou 2, **caractérisé en ce que** l'arbre de couteau (24) est monté dans un rotor annulaire (3) qui entoure un stator (2) contenant le passage (7), et **en ce que** le rotor (3) est entraîné en rotation par rapport au stator (2).

4. Dispositif selon l'une des revendications 1 à 3, **caractérisé en ce que** le couteau (32) est formé par au moins deux arêtes droites (36, 37, 38) dont l'une est une arête de coupe (37) dont l'intersection avec l'autre arête (36, 38) forme un angle (α) qui est avantageusement égal à environ 90° et qui est de façon particulièrement préférée inférieure à 90°.

5. Dispositif selon la revendication 4, **caractérisé en ce que** l'arête de coupe (37) est formée par deux plans de coupe (39, 40) dont l'intersection forme un deuxième angle aigu (β) et qui s'étend parallèlement du plan supérieur (41) et du plan inférieur (42) du couteau (32) et à distance de ceux-ci.

6. Dispositif selon l'une des revendications 1 à 5, **caractérisé en ce que** la commande du mouvement de pivotement radial du couteau (32) est effectuée par un galet de commande (27) qui est relié à rotation à l'arbre de couteau (24) et qui suit une came de commande (46), fixée à rotation au stator (2), lorsque le rotor (3) est en rotation.

7. Dispositif selon l'une des revendications 1 à 6, **caractérisé en ce que** la came de commande (46) qui entoure annulairement le passage (7), à distance de celui-ci, comporte un évidement (47) dans une direction radiale et **en ce qu'**il est prévu une bague de commande circulaire (48) qui est fixe en rotation et mobile axialement par rapport à la came de commande (46), le diamètre extérieur de la bague de commande (48) étant à peu près égal au plus grand diamètre extérieur (Dk) de la came de commande (46).
